# EUROPÄISCHE PATENTANMELDUNG

(11) **EP 1 043 667 A2**
(43) Veröffentlichungstag der Anmeldung: **11.10.2000**
(21) Anmeldenummer: 00104530.1
(22) Anmeldetag: 10.03.2000
(51) Int. Cl.: G06F 17/60

(54) **Online Service zur effizienten Kontaktaufnahme zwischen Käufern und Anbietern chemischer Produkte**

(30) Priorität: 18.03.1999 AT 48599
(71) Anmelder: Saischek, Jörn, 8010 Graz (AT)
(72) Erfinder: Saischek, Jörn, 8010 Graz (AT)

(57) **Zusammenfassung**

Die vorliegende Erfindung betrifft ein Online Service welches eine effiziente Kontaktaufnahme zwischen Käufer und Anbieter chemischer Produkte ermöglicht. Anbieter tragen ihre Produktinformationen und eventuelle Restriktionen bezüglich des Verkaufs in eine Datenbank ein. Manche Anbieter tragen Informationen ein die das automatische Generieren von Angeboten ermöglichen. Käufer teilen ihren Bedarf, mit den notwendigen Spezifikationen, dem Online Service mit. Das Online Service durchsucht die Datenbank nach Anbietern unter Berücksichtigung aller Restriktionen und Spezifikationen, generiert allfällige automatische Angebote, versendet diese und informiert alle relevanten Anbieter über den Bedarf.

## Beschreibung

### ART DER ERFINDUNG

Diese Erfindung bezieht sich auf ein Online Service zur effizienten Kontaktaufnahme zwischen Käufer und Anbieter chemischer Produkte.

### STAND DER TECHNIK

Der Einkauf von Chemikalien ist ein ineffizienter, zeit- und kostenaufwendiger Prozeß. Üblicherweise durchsucht der Käufer mehrere Kataloge von Produzenten oder Händlern nach dem von ihm gesuchten Produkt und schickt danach Anfragen an die relevanten Anbieter. Diese bearbeiten die Anfrage und senden dem Interessenten ihre Anbote. Eine Erleichterung für den Käufer sind Produktverzeichnisse in denen mehrere Anbieter für chemische Produkte aufgelistet sind. Neuere Formen dieser Produktverzeichnisse sind CD-ROM Datenbanken oder Anbieterverzeichnisse im Internet. Eine alternative Form des Einkaufs ist einfach in einem der unzähligen 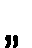 schwarzen Bretter" des Internets seinen Bedarf anzuschlagen.

All diese Methoden können aus folgenden Gründen als unzulänglich bezeichnet werden: Produktverzeichnisse sind teuer und aufgrund der hohen Eintragungsgebühren nicht sehr umfangreich. Hingegen sind Kataloge von Anbietern trotz der hohen Druck- und Versandkosten üblicherweise gratis. Allerdings werden nur die Chemikalien eines Anbieters beschrieben und so gestaltet sich die Suche nach einem gewissen chemischen Produkt als langwieriges Durchsuchen einer Reihe von Katalogen. Zudem ist normalerweise die Anzahl der zur Verfügung stehenden Kataloge beschränkt auf wenige bekannte Firmen. Das Durchsuchen eines Internetverzeichnisses für chemische Produkte ist meistens gratis, aber auch hier sind aufgrund der hohen Eintragungsgebühren die Verzeichnisse nicht sehr umfangreich. All diese Methoden haben noch die gravierende Einschränkung daß nach erfolgreicher Suche die eigentliche Arbeit des Anschreibens beginnt. Dies gestaltet sich vor allem dann als langwierig, wenn viele (mehr als 20) Anbieter erreicht werden sollen. Eine einfachere Methode ist das Anschlagen seines Bedarfes auf einem der zahlreichen 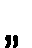 schwarzen Bretter" im Internet. Nur herrscht hier das Prinzip Hoffnung vor daß der richtige Produzent das richtige schwarze Brett zum richtigen Zeitpunkt besucht.

### BESCHREIBUNG DER ERFINDUNG

Nun wurde von den Erfindern eine neue, überraschend effiziente Methodik gefunden um den weltweiten Handel mit chemischen Produkten zu erleichtern. Anbieter können gegen eine geringe Gebühr oder gratis Ihre Produkte in eine Datenbank eintragen lassen. Interessenten stellen per Internet eine Anfrage, die Datenbank wird durchsucht und die Anfrage wird im Namen des Interessenten an alle relevanten Anbieter weitergeleitet. Somit können mit einer in kurzer Zeit zu erledigenden Eingabe des Bedarfes viele Produzenten und Anbieter erreicht werden. Des weiteren besteht die Möglichkeit für Anbieter ein automatisches Angebot - die Produktdaten und Preise enthält - generieren zu lassen. Dieses automatisch generierte Angebot wird dem Interessenten per Email/Fax zugesendet. So findet eine substantielle Entlastung der Verkaufsabteilung des Anbieters statt.

Für Käufer von chemischen Produkten ist mit der vorliegenden Erfindung erstmals möglich in einem Arbeitsgang eine große Anzahl von Anbietern zu erreichen, so daß er aus einer Vielfalt von Angeboten jenes mit den besten Konditionen auswählen kann.

Für Anbieter - vor allem für Klein- und Mittelbetriebe - bietet sich durch das Internet die Möglichkeit weltweit mit ihren Produkten präsent zu sein. Durch genaue Auswahl von Restriktionen kann sehr spezifisch auf die Möglichkeiten des Anbieters eingegangen werden. So kann er für die einzelnen Produkte regionale, nationale oder multinationale Absatzmärkte definieren, unter von ihm bestimmten Gewichtsklassen auswählen, Reinheit und Terminrestriktionen angeben oder automatische Angebote generieren lassen. Darüber hinaus ermöglicht ihm die vorliegende Erfindung die von ihm angegebenen Informationen zu jedem Zeitpunkt abzuändern. So kann er z.B. bei Marktbewegungen schnellstmöglich die Preisinformationen in den generierten Angeboten anpassen.

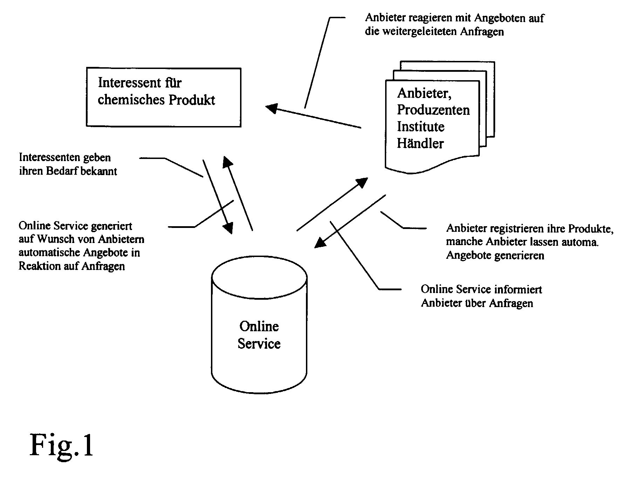

Die erfindungsgemäße Methodik läßt sich am einfachsten anhand von Fig.1 erklären:
Anbieter tragen in die Datenbanken des Online Service ihre Produktdaten ein.
Manche Anbieter lassen automatische Angebote generieren.
Ein Interessent teilt dem Online Service seinen Bedarf und seine Spezifikationen mit.
Das Datenbankprogramm sucht nach allen Anbietern des gesuchten chemischen Produktes unter Berücksichtigung aller Spezifikationen und Restriktionen und teilt sie in zwei Klassen ein - in Anbieter mit automatisch zu generierenden Abgeboten oder in Anbieter die über die Anfrage informiert werden sollen.

Die Methode generiert die automatische Angeboten der Anbieter an den Interessenten, die Benachrichtigungen der Anbieter über die Nachfrage und versendet diese Botschaften per Email oder Fax. Die so informierten Anbieter reagieren mit Angeboten auf die weitergeleiteten Anfragen.

Die Identifizierung der chemischen Substanzen erfolgt durch die weltweit geltende CAS Registry Nummer da allein diese a) eine genaue und fehlerfreie Zuordnung der Produkte ermöglicht und b) alle bekannten Substanzen (Stand März 1999: 19 Mio.) beschreibt. Alle anderen Identifizierungsnummern wie EINECS, Beilstein Registry Nummer, UN-Nummer oder ähnliche sind, obwohl eindeutig zuordenbar, bei weitem nicht so umfassend - einzig das CAS Registry umfaßt mehr als 19 Mio. Substanzen (Stand März 1999). Eine sprachlich einheitliche Beschreibung gestaltet sich schwierig da durchaus mehrere korrekte Nomenklaturmethoden angewendet werden können - noch dazu in unterschiedlichen Sprachen. So bietet die erfindungsgemäße Methodik die Möglichkeit durch Eingabe von Identifizierungsnummer oder Namensfragmenten oder Handelsnamen oder Summenformeln die Datenbank zu durchsuchen und anschließend aus den angezeigten Treffern die korrekte Substanz auszusuchen oder eine neue Suche zu starten. Die CAS Registry Nummer dieser ausgewählten Substanz wird nun zum Durchsuchen der Datenbank verwendet.

### Kurze Beschreibung der Diagramme

Fig.1 zeigt wie das Online Service funktioniert

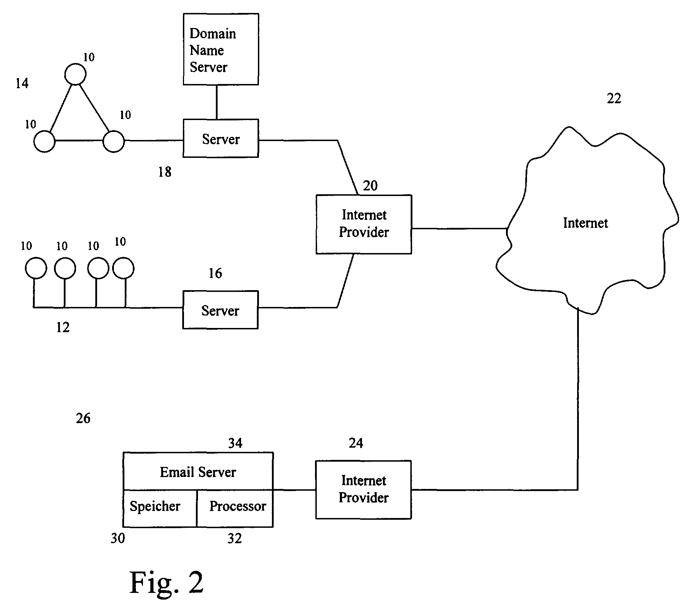

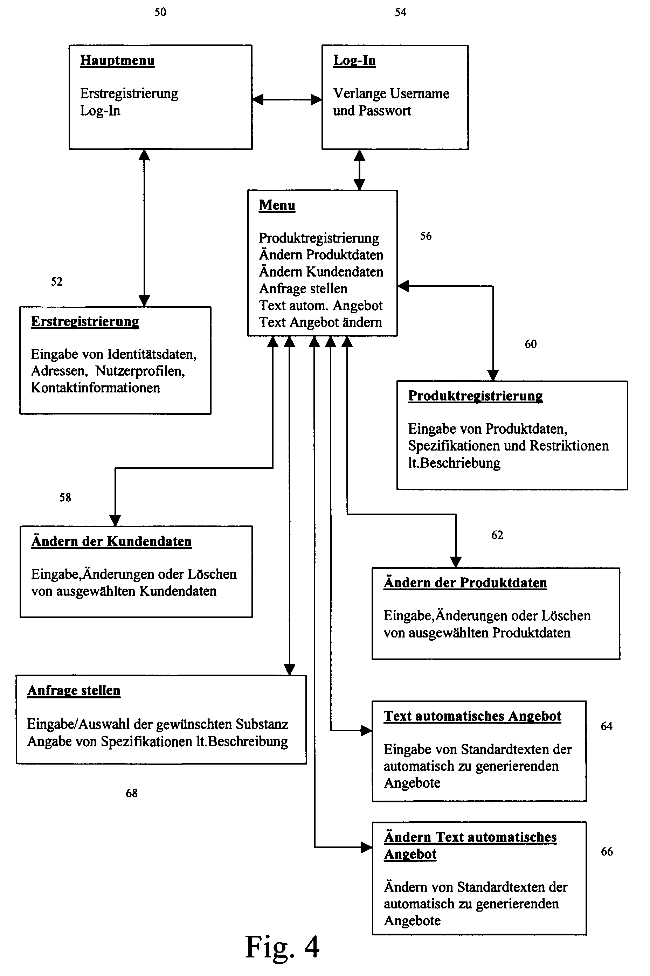

Fig.2 beschreibt ein Blockdiagramm des Online Service innerhalb eines Netzwerks.
Fig.3 beschreibt ein funktionelles Blockdiagramm eines Datenbankservice.
Fig.4 beschreibt ein Verzeichnis von Menüs und Eingabebildschirmen.
Fig.5a-5e zeigen Teile von Eingabebildschirmen

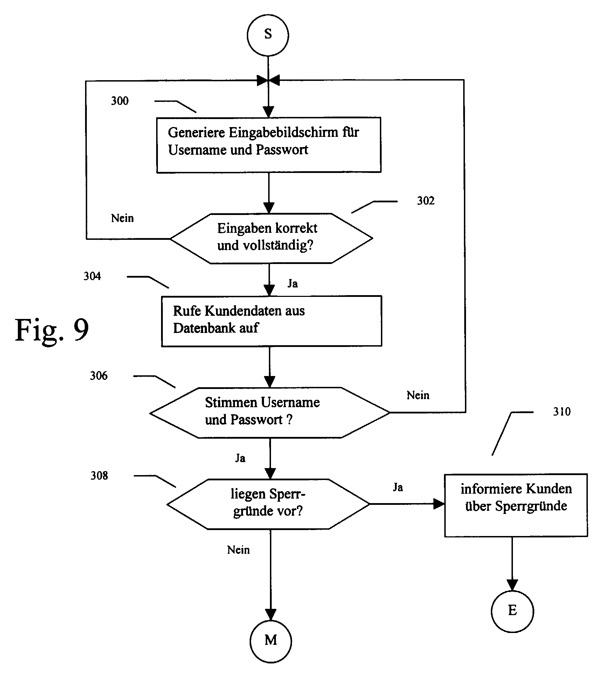

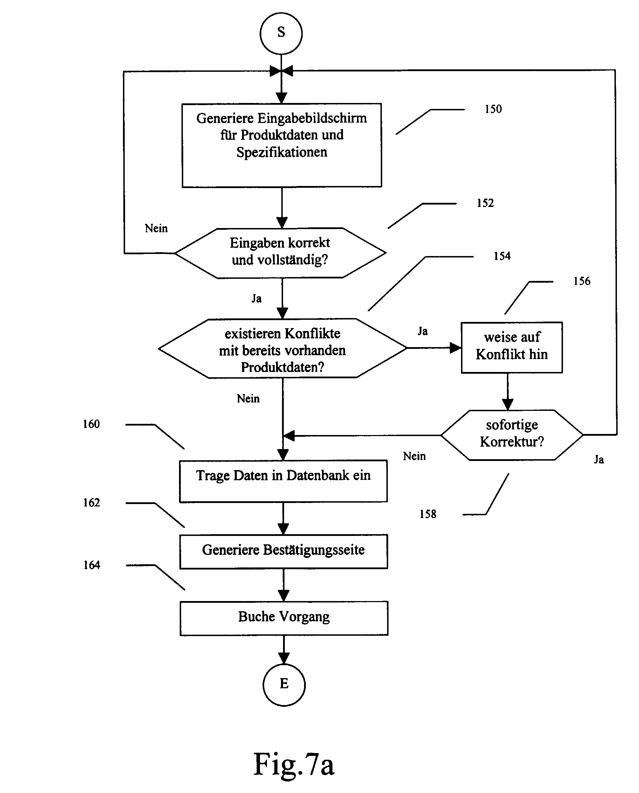

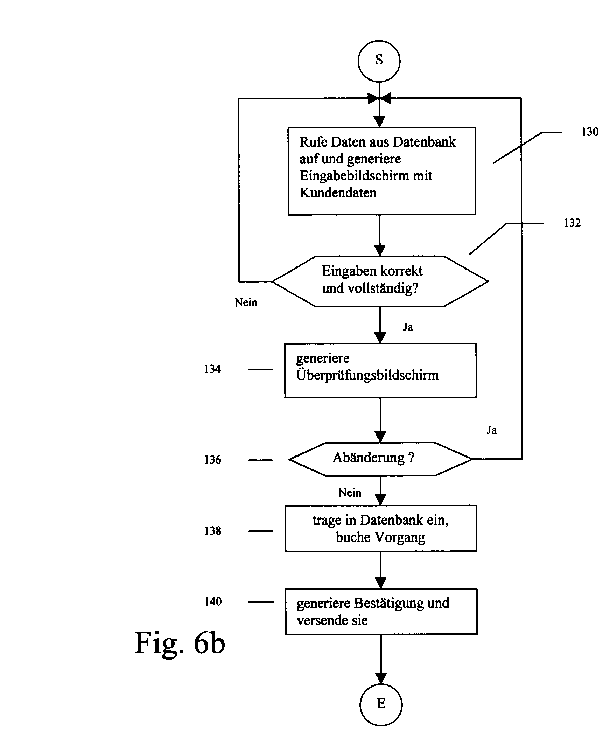

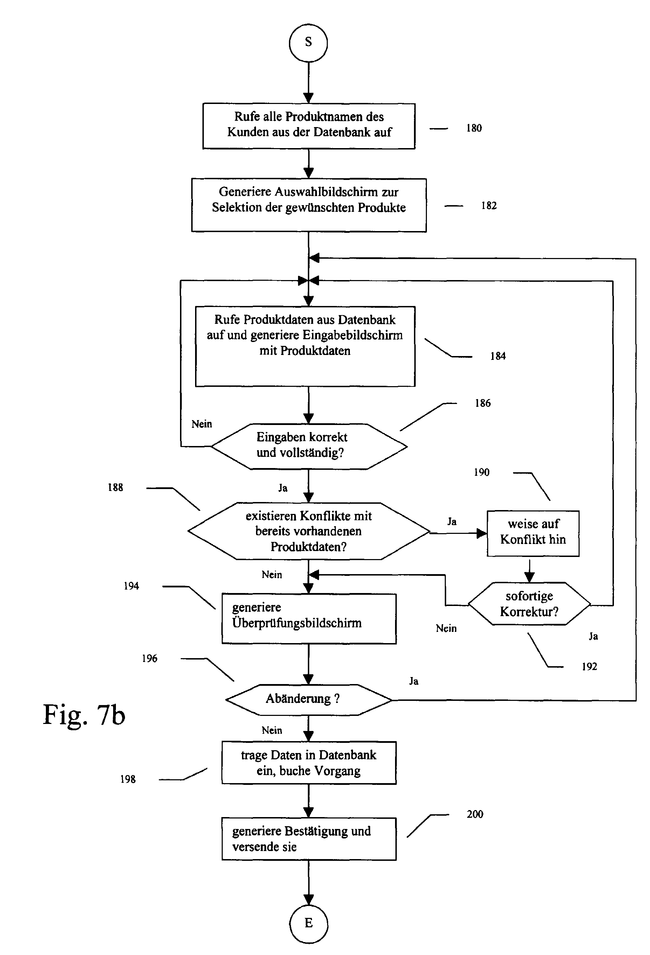

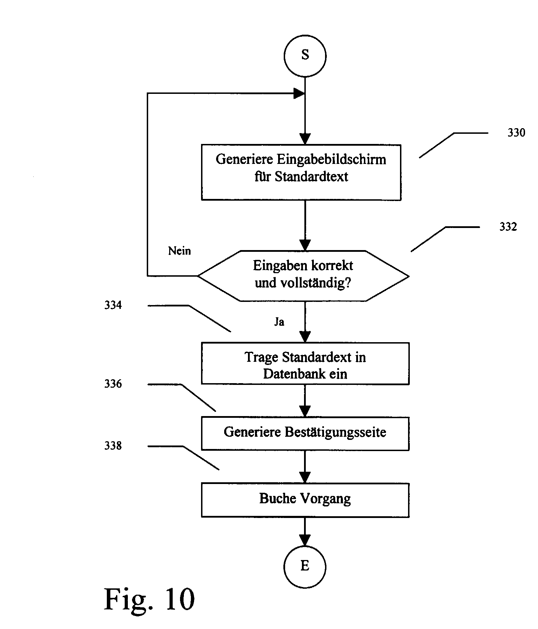

Fig.6-11 zeigen Flußdiagramme die die erfindungsgemäße Methode beschreiben
Fig.12 beschreibt ein funktionelles Blockdiagramm eines Konfigurationsmanagers

### Detaillierte Beschreibung

Fig.1: Individuelle User (10) können über eine Anzahl verschiedenartiger Netzwerke wie, beispielsweise und keineswegs einschränkend, Local Area Network (LANs) wie Ethernet LAN (12) oder einem Token Ring (14) oder regionale Netzwerke, die durch Telefonleitungen erreichbar sind, verbunden werden. LANs (12), (14) sind über ihre Server (16), (18) mit einem Internetprovider (20), wie beispielsweise BBN Inc. Cambridge, Mass. die den Internetzugang für viele Server anbietet, verbunden.

Um den Bedarf an chemischen Produkten an Anbieter weiterzuleiten, können User auf das erfindungsgemäße Online Service (26) zugreifen. Service (26) wird im World Wide Web placiert und ist generell der Öffentlichkeit zugänglich durch Hyper Text Transfer Protokoll (HTTP) Anfragen von User mit kommerziell erhältlichen Browsern.

In einer bevorzugten Form hat Online Service (26) eine sehr große Zahl von Einträgen. Diese Einträge sind Informationen die chemische Produkte und User des Online Service (26) betreffen wie, beispielsweise und keineswegs einschränkend, Substanznamen, CAS Registry Nummern, Anbieter, Adressen, Kontaktpersonen, Kontaktmöglichkeiten, automatisch zu generierende Angeboten.

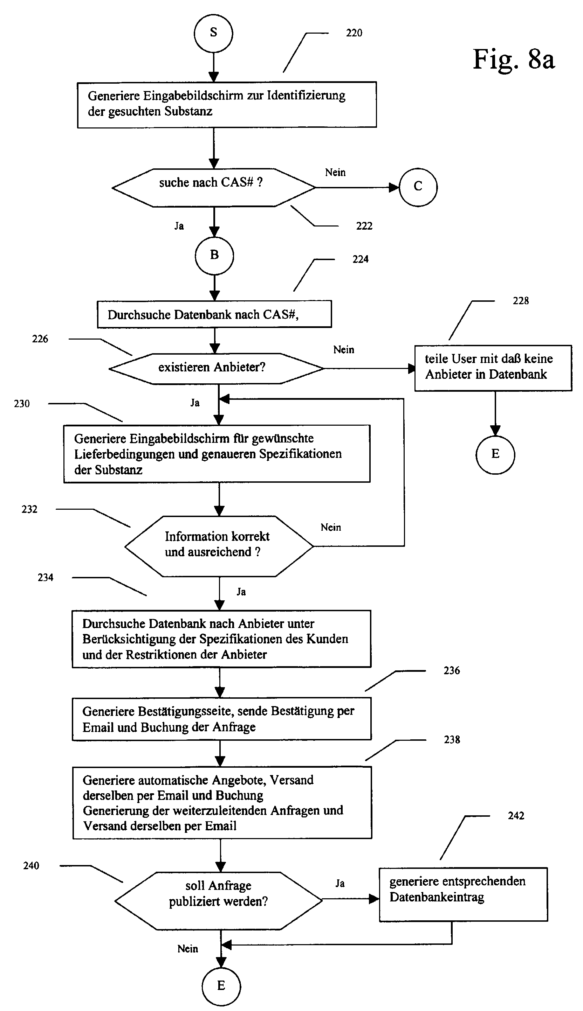

Die Informationen über User werden vorzugsweise aus Quellen wie Schrift 100 (Fig. 6a) erhalten. Der User trägt die Informationen ein und übersendet Sie an das Prozeßsystem (32). Das Prozeßsystem (32) bestimmt ob die eingegebenen Informationen vollständig und korrekt sind (Schrift 102), ob der gewählte User noch nicht verwendet wird (Schrift 104), ob der User schon als Kunde registriert ist (Schrift106) und in diesem Fall ob Sperrgründe vorliegen (Schrift Falls Sperrgründe vorliegen wird der User über diese informiert (Schritt 10) und anschließend die Registrierung abgebrochen. Wenn die Bedingungen einer Registrierung erfüllt sind generiert Prozeßsystem (32) ein Passwort (Schrift 112), bestätigt die Registrierung durch generieren einer HTML Seite (Schritt 116) und sendet abschließend dem User eine Email, die die Registrierungsinformationen und das Passwort enthalten, zu (Schritt 118).

Informationen über chemische Produkte werden vorzugsweise aus Quellen wie Schrift 150 (Fig. 7a) erhalten. Der User trägt die Informationen ein und übersendet Sie an das Prozeßsystem (32). Das Prozeßsystem (32) bestimmt ob die eingegebenen Informationen vollständig und korrekt sind (Schrift 152), ob potentielle Konflikte mit bereits eingegebenen Produkten des Users auftreten können (Schrift 164). In diesem Fall wird der User zuerst durch generieren einer HTML Seite auf den möglichen Konflikt hingewiesen (Schrift 156) und ihm die Möglichkeit einer sofortigen Korrektur angeboten (Schritt158). Das Prozeßsystem (32) überträgt die Daten in die Datenbanken (Schritt160), bestätigt die Produktregistrierung durch generieren einer HTML Seite (Schritt 62) und bucht anschließend den Vorgang (Schritt 164).

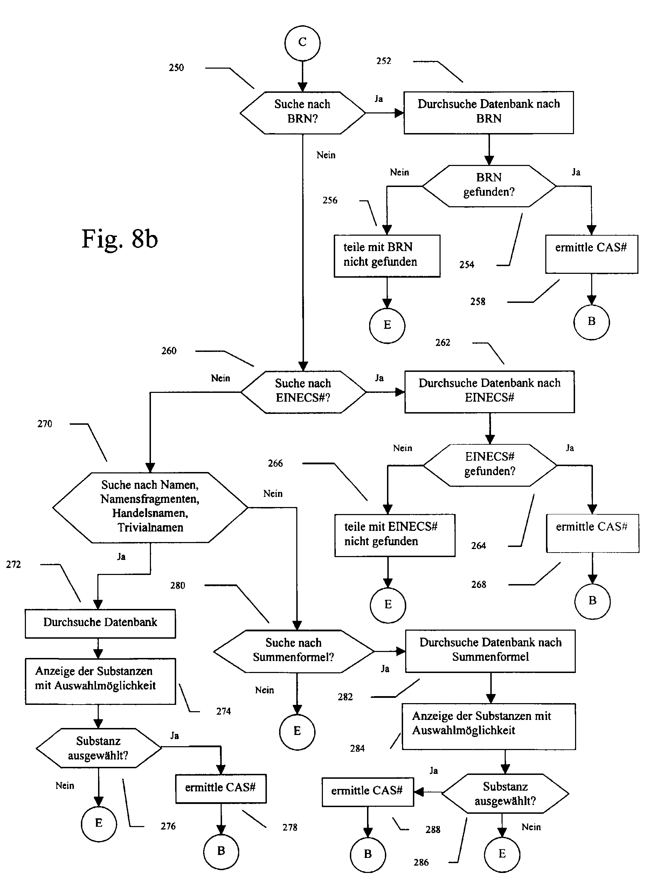

Die Weiterleitung eines Bedarfes an chemischen Produkten wird bevorzugt durch Quellen wie Schritt 220 (Fig. 8a) eingeleitet. Der User trägt die Identifikationsinformationen ein und übersendet sie an das Prozeßsystem (32). Das Prozeßsystem (32) bestimmt ob der User die gesuchte Substanz mit Hilfe der CAS Registry Nummer identifiziert hat (Schritt 222). Falls diese ihm nicht bekannt ist und er einen Namen oder Handelsnamen oder Namensfragmente oder eine EINECS# oder UN# oder die Summenformel angegeben hat verzweigt das Prozeßsystem nach Abschnitt C um die CAS# aus den angegebenen Daten entweder direkt oder interaktiv zu ermitteln (Schritt 220).
Im Programmabschnitt C ermittelt das Prozeßsystem (32) die CAS# aus den vom User im Schritt 220 angegebenen Informationen.
Falls die BRN vom User eingetragen wurde (Schritt 250), durchsucht Prozeßsystem (32) die Datenbank nach der BRN (Schritt 252). Falls die BRN nicht gefunden wurde (Schritt 254) generiert das Prozeßsystem (32) eine HTML-Seite mit der Mitteilung das diese BRN unbekannt ist (Schrift 256) und bricht das Programm ab. Ansonsten ermittelt das Prozeßsystem (32) die dazugehörige CAS# (Schritt 258) und geht zu Abschnitt (B) weiter.
Falls die EINECS# vom User eingetragen wurde (Schritt 260), durchsucht Prozeßsystem (32) die Datenbank nach der EINECS# (Schritt 262). Falls die EINECS# nicht gefunden wurde (Schritt 264) generiert das Prozeßsystem (32) eine HTML-Seite mit der Mitteilung das diese EINECS# unbekannt ist (Schritt 266) und bricht das Programm ab. Ansonsten ermittelt das Prozeßsystem (32) die dazugehörige CAS# (Schritt 268) und geht zu Abschnitt (B) weiter.
Falls die Namen, Namensfragmente, Handelsnamen oder Trivialnamen vom User eingetragen wurde (Schritt 270), durchsucht Prozeßsystem (32) die Datenbank nach den Namen, Namensfragmente, Handelsnamen oder Trivialnamen (Schritt 272). und generiert eine HTML-Seite mit den gefundenen Substanzen mit Auswahlmöglichkeiten (Schritt 274). Der User wählt nun die von ihm gesuchte Substanz aus und überträgt diese Information an das Prozeßsystem (32). Falls er keine Substanz ausgewählt hat bricht das Programm ab (Schrift 276). Ansonsten ermittelt das Prozeßsystem (32) die dazugehörige CAS# (Schritt 278) und geht zu Abschnitt (B )weiter.
Falls die Summenformel vom User eingetragen wurde (Schrift 280), durchsucht Prozeßsystem (32) die Datenbank nach Substanzen mit der vom User angegebenen Summenformel (Schritt 282) und generiert eine HTML-Seite mit den gefundenen Substanzen mit Auswahlmöglichkeiten (Schrift 284). Der User wählt nun die von ihm gesuchte Substanz aus und überträgt diese Information an das Prozeßsystem (32). Falls er keine Substanz ausgewählt hat bricht das Programm ab (Schritt 286). Ansonsten ermittelt das Prozeßsystem (32) die dazugehörige CAS# (Schritt 288) und geht zu Abschnitt (B) weiter.
Sobald die CAS# bekannt ist, durchsucht das Prozeßsystem die Datenbank nach Anbietern (Schritt 224). Falls keine Anbieter dem Online Service bekannt sind (Schritt 226), wird vom Prozeßsystem (32) eine HTML-Seite mit dieser Information generiert und dem User mitgeteilt (Schritt 228).
Ansonsten generiert das Prozeßsystem (32) einen Eingabebildschirm in dem der User die gewünschten Lieferbedingungen und genauere Spezifikationen der Substanz wie beispielsweise und keineswegs einschränkend Lieferort, Lieferland, Reinheit oder Liefertermin einträgt (Schritt 230) und an das Prozeßsystem (32) übermittelt. Dieses überprüft ob alle notwendigen Informationen korrekt angegeben wurden (Schritt 232), durchsucht die Datenbank nach Anbietern unter Berücksichtigung aller Spezifikationen des Users und aller Restriktionen der Anbieter (Schritt 234), generiert eine HTML-Bestätigungsseite, sendet eine Bestätigung per Email an den User und verbucht die Anfrage (Schritt 236). Das Prozeßsystem (32) generiert die automatischen Angebote der selektierten Anbieter, versendet diese an den User und verbucht diese; generiert die weiterzuleitenden Anfragen und versendet diese an die Anbieter (Schritt 238). Falls der User will daß seine Anfrage im Internet veröffentlicht werden soll (Schritt 240) generiert das Prozeßsystem einen entsprechenden Datenbankeintrag (Schritt 242).

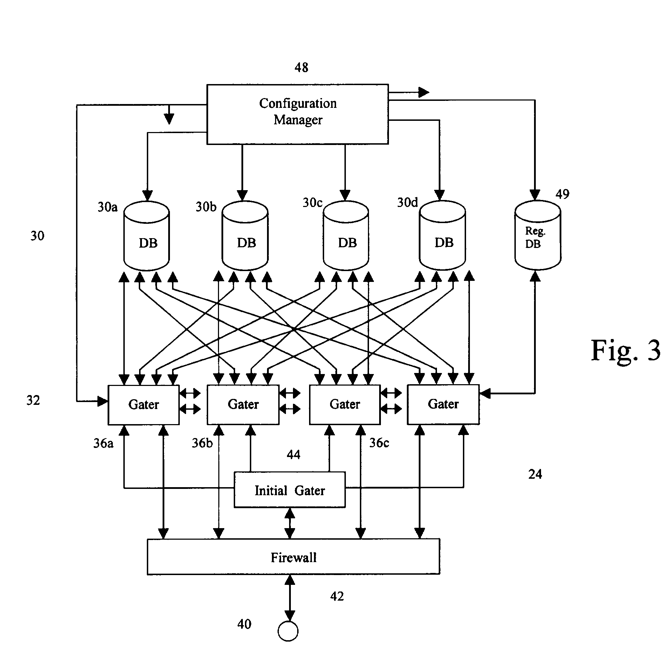

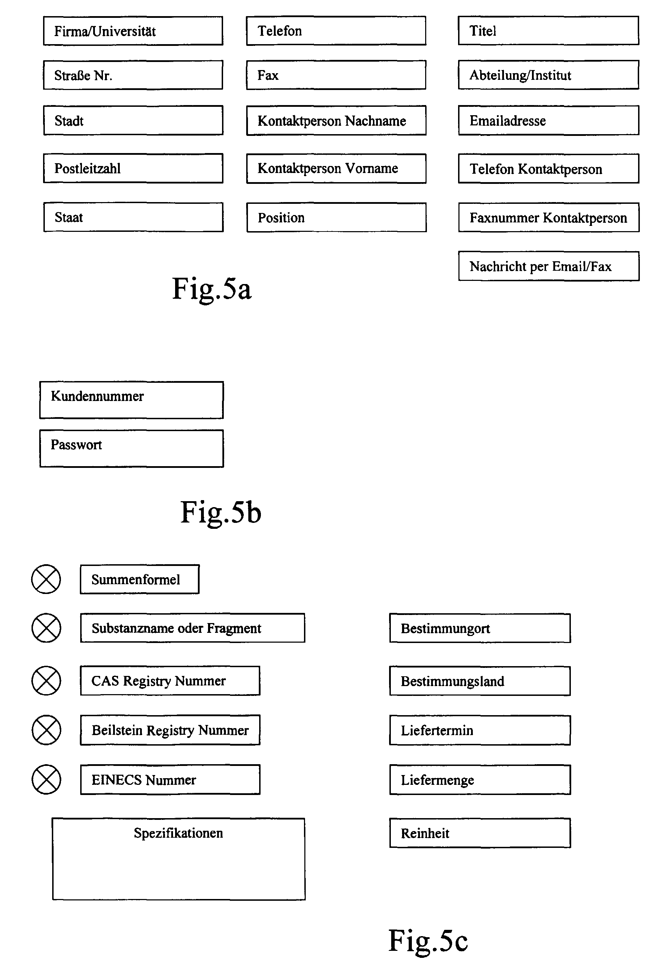

Nach diesem Überblick wie die Methode die, von den Usern angegebenen, Informationen verarbeitet, werden nun im genaueren Detail die Komponenten und die Operationen des Speichers (30) und des Prozeßsystems (32) beschrieben (siehe Fig. 3). Wenn ein User (40) das Online Service (26) erreichen will, kommuniziert er zuerst mit einem Webserver und Initial Gater (44). Das Online Service (26) besitzt ein Speichersystem (30) und ein Prozeßsystem (32).
Speichersystem (30) kann ein residentes, ein ferngesteuertes oder eine Kombination von residentem und ferngesteuertem Speichersystem sein und besitzt eine Anzahl von Datenbanken mit Informationen über chemische Produkte und User. Vorzugsweise hat das Speichersystem (30) mehrere, getrennt ansprechbare Datenbanken (30a-30d), welche jede vorzugsweise das Model Cindex, erhältlich von Trio., Inc. sind und in denen die selben Informationen gespeichert sind. Speichersystem (30) kann auch andere Datenbanken besitzen die andere Informationen speichern oder andere Aufgaben zu erfüllen haben.
Prozeßsystem (32) setzt sich aus einer Reihe von Computern, genannt 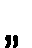 Gater" (36a-36d( zusammen, die alle vorzugsweise Pentium.RTM basierende Personal Computer auf denen ein 32bit Betriebssystem wie Windows NT läuft, sind. Jeder dieser Gater (36a-36d) ist mit den Datenbanken (30a-30d) direkt der durch ein zwischengeschaltetes Switching Network verbunden. Obwohl nur 4 Gater und Datenbanken in Fig.3 zu sehen sind, können ohne Einschränkung mehr oder weniger verwendet werden.
Ein User (40) erreicht das Online Service (26) über das Internet und durch eine Firewall (42) die das Online Service vor unbefugten Zugriffen schützt. Wenn also ein User das Online Service, durch anwählen eines Universal Resource Locator URL, anspricht, bietet das Prozeßsystem (32) dem User ein Hauptmenu (50) (Fig. 4) an welches vorzugsweise zumindest folgende Möglichkeiten anbietet: Erstregistrierung (52), und Log-In (54). Die Auswahl kann der User per Keyboard oder typischerweise mit einer Maus oder einem Trackball treffen.

Wenn der User den Menupunkt zur Erstregistrierung aus Hauptmenu (50) auswählt, bietet das Prozeßsystem (32) dem User einen Eingabebildschirm (52) an mit Eingabefeldern für den Firmen oder Universitätsnamen, die Adressen, Telefon und Faxnummern, Kontaktperson, Emailadressen und ob die Kommunikation mit dem User per Email oder Fax erfolgen soll (Fig. 5a).

Wenn der User den Menupunkt zum Log-In aus Hauptmenu (50) auswählt, bietet das Prozeßsystem (32) dem User einen Eingabebildschirm (54) an mit Eingabefeldern für den Usernamen und dem Passwort (Fig. 5b).

Wenn der User eine Auswahl aus dem Hauptmenu (50) trifft, leitet der Gater (44) die Auswahl an einen der Gater (36a-36d) weiter. Die Wahl welcher Gater angesprochen wird basiert auf der Auslastung aller Gater (36a-36d) oder alternativ auf einem Round-Robin Verfahren. Sobald die Auswahl an einen der Gater (36a-36d) beispielsweise Gater (36b), weitergeleitet wurde, findet keine Kommunikation mehr zwischen User (40) und Gater (44) statt, Gater (36b) kommuniziert direkt mit User (40) durch die Firewall (42).

Gater (36b) (und jeder der anderen Gater) hat eine Preprocessing Application die Selektionen bearbeitet. Diese Anwendung bestimmt ob die eingetragenen Informationen korrekt und vollständig sind, welche Art der Selektion der User getroffen hat oder ob er eine der anderen weiter unten beschriebenen Optionen gewählt hat. Falls der ausgewählte Menupunkt auf eine der Datenbanken (30a-30d) zugreifen muß bestimmt die Preprocessing Application in Gater (36b) auf welche der Datenbanken (30a-30d) zugegriffen wird. Diese Auswahl wird im allgemeine durch ein Round-Robin Verfahren bestimmt oder alternativ durch eine Bestimmung der Auslastung der Datenbanken. Jede der Datenbanken besitzt eine Lookup Application die die geforderten Daten aus der Datenbank wie z.B. oben beschrieben aufruft.

Um wie oben beschrieben operieren zu können, beobachten die Preprocessing Applications die Datenbanken die gerade arbeiten und passen sich an eine temporäre oder permanente Änderung der Anzahl der Datenbanken an. Dieses System von vielen Gatern und Datenbanken weist somit eine hohe Redundanz auf. Die Tatsache daß in jeder Datenbank eine kompletter Satz an Informationen gespeichert ist erhöht noch diese Redundanz und erlaubt ein hohes Maß an Flexibilität und Erweiterbarkeit des Systems.

Fig. 5a zeigt einen Eingabebildschirm mit dessen Hilfe der User registriert wird.
Fig. 5b zeigt einen Eingabebildschirm mit dessen Hilfe der User einloggt.
Fig. 5c zeigt einen Eingabebildschirm in den der User seinen Bedarf und eventuelle Spezifikationen einträgt.

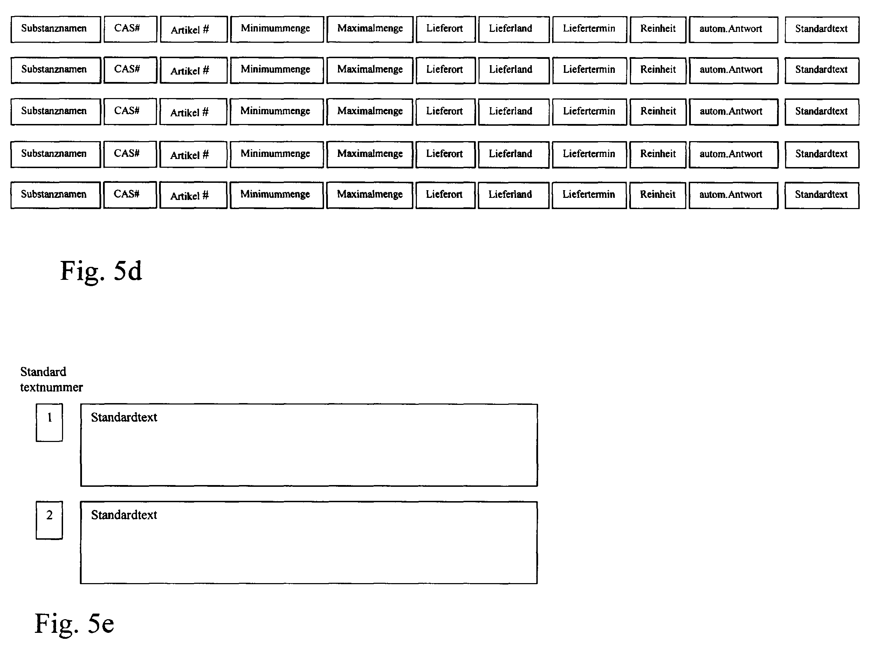

Fig. 5d zeigt einen Eingabebildschirm mit dessen Hilfe der User seine Produktdaten eintragen kann. Bis auf den Substanznamen und der CAS# sind alle Angaben optional.
Fig. 5e zeigt einen Eingabebildschirm mit dessen Hilfe der User Standardtext für die automatisch zu generierenden Angebote des Anbieters an den Interessenten angeben kann.

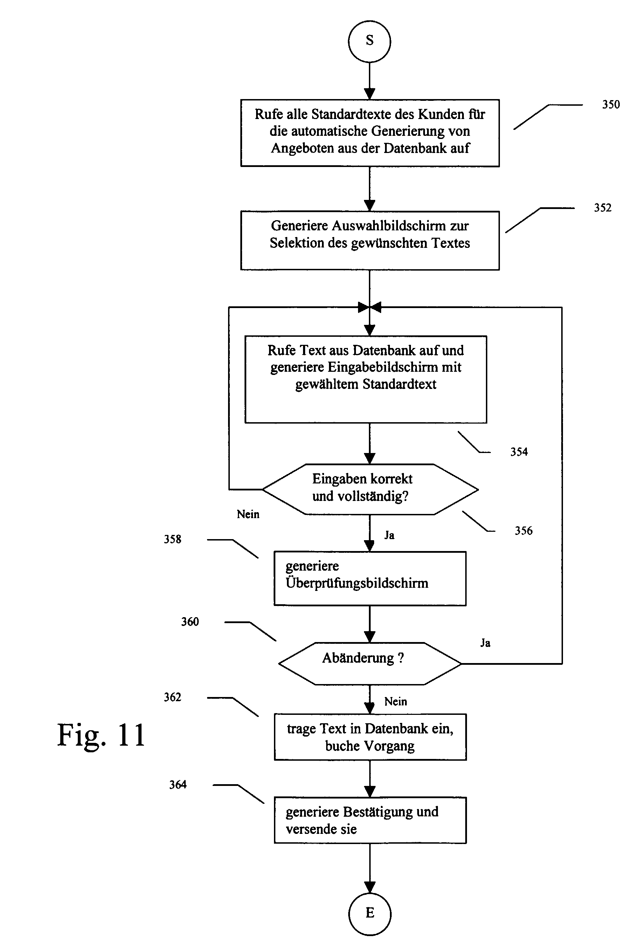

Fig. 6a, 7a und 11 sind Flußdiagramme die das Abändern oder Löschen von in der Datenbank gespeicherten Informationen betreffen.

Das Online Service (26) hat auch ein Registrierungssystem mit dessen Hilfe registrierte User auf das Online Service zugreifen können.

Wenn der User die Erstregistrierung (52) im Hauptmenu (50) auswählt, ruft das Prozeßsystem (32) eine Registrierungsapplikation auf. Zuerst bietet das Prozeßsystem (32) dem User einen Eingabebildschirm (Fig. 5a) an in dem der User unter anderem die Email Adresse eintragen muß (100 Fig.6a). Sobald das Prozeßsystem (32) die vom User eingegebene Emailadresse erhält und keine Ausschließungsgründe vorliegen (102, 104, 106, 108), generiert es ein Passwort (112) und sendet dieses zusammen mit den vom User angegebenen Informationen per Email an den User (118).

Sobald der User das Passwort erhalten hat, kann er in das System einloggen in dem er den Menupunkt 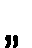 Log-In" aus dem Hauptmenu (50) auswählt. In Reaktion auf seine Auswahl ruft das Prozeßsystem (32) eine Log-In Application auf. Diese Anwendung läßt den Prozessor einen Eingabebildschirm (54), der Eingabefelder für den Usernamen und das Passwort aufweist, aufrufen. Diese vom User eingegeben Informationen werden an eine Security Application weitergeleitet, die die vom User eingegebenen Informationen anhand der in der Registrierungsdatenbank (49) gespeicherten Informationen authentifiziert.

Sobald der User authentifiziert wurde, bietet ihm das Prozeßsystem (32) ein Menü (56 Fig.4) an, welches eine Reihe von Menüpunkten wie Produktregistrierung (60), Anfrage stellen (68), ändern von Produktdaten (62), ändern von Kundendaten (58), Eingabe von Standardtexten innerhalb der automatisch zu generierenden Angebote (64) und Änderung von Standartexten innerhalb der automatisch zu generierenden Angebote (66), die zum Teil schon erklärt wurden, zum anderen Teil selbsterklärend sind. Diese Selektionen rufen generell Routinen auf die die vom User getätigten Auswahl bearbeiten,

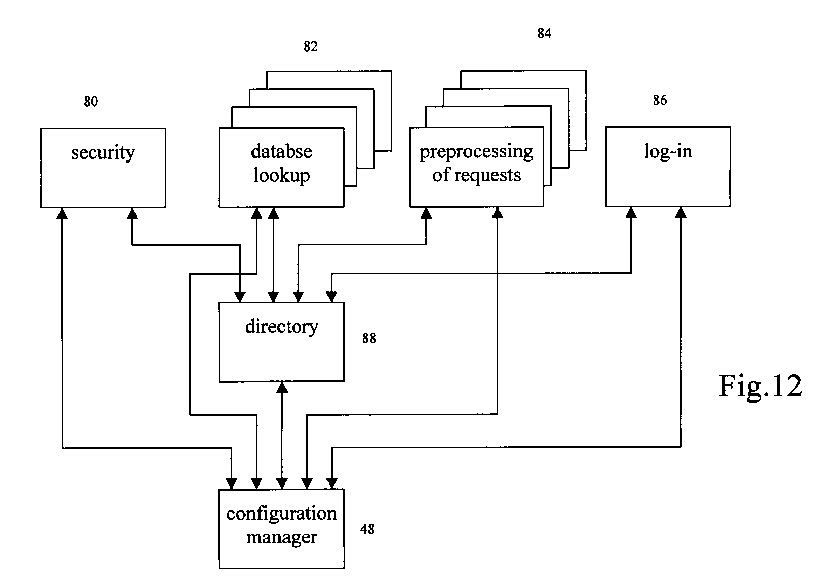

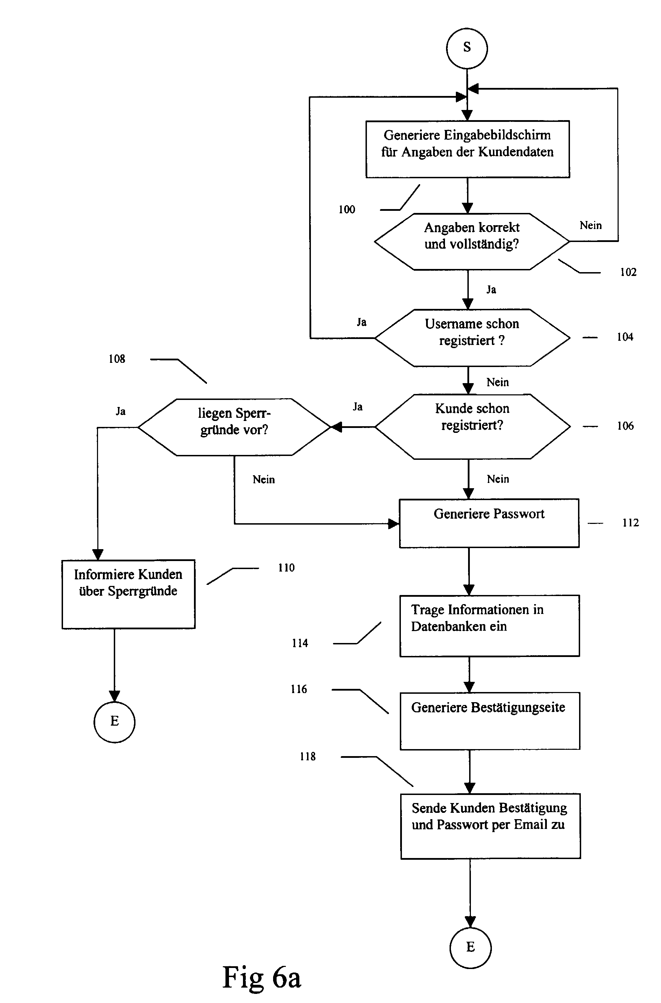

Das Online Service (26) betreibt auch einen Konfigurationsmanager (48) der an alle Datenbanken und an alle Gater gekoppelt ist, um - wenn Änderungen am Online Service (26) durchgeführt werden - die Anwendungen zu rekonfigurieren. Der Konfigurationsmanager (48) ist mit Anwendungen verknüpft, die innerhalb des Computers im Prozeßsystem (32) und in den Datenbanken im Speichersystem (30) ablaufen. Diese Anwendungen sind zum Beispiel (Fig. 12) Security Application (80), Database Lookup Applications (82), Preprocessing Applications (84), und Log-In Application (86). Natürlich können auch andere Anwendungen im System resident vorhanden sein.

Jede dieser Anwendungen (80-86) und der Konfigurations Manager (48) ist mit einem Verzeichnis (88) verknüpft, in dem Informationen bezüglich den Beziehungen zwischen den Anwendungen und die Arten der Ereignisse die die Anwendungen betreffen gespeichert sind. Einige der Anwendungen beeinflussen die Operationen von anderen; z.B. werden Anfragen von den Preprocessing Applications (84) in den Gatern an die Lookup Applicationen (82) in den Datenbanken weitergeleitet. Falls eine der Datenbanken und daraus folgend natürlich die Lookup Application (82) der Datenbank - durch Intervention des System Managers oder durch Fehlfunktionen - inoperativ ist, müssen dies die Preprocessing Applications (84) berücksichtigen wenn sie Anfragen an Lookup Applications (82) weiterleiten. Obwohl Preprocessing Applications dies von sich aus berücksichtigen sollten, ist eine Rekonfiguration eingeleitet vom Konfigurations Manager (48) zu bevorzugen, da auch andere Anwendungen beeinflußt werden könnten.

Ein anderes Beispiel ist die Log-In Application (86) die in enger Verbindung mit Security Application (80( steht. Wenn ein User einloggt, überprüft die Security Application (80) die Registrierungsdatenbank (49) um sicherzugehen daß der User zugangsberechtigt ist und das korrekte Passwort angegeben hat. Falls jetzt Security Application (80) nicht funktioniert, sollten die Log-In Funktion angehalten werden um nicht autorisierte User auszusperren.

Verzeichnis (88) beinhaltet Informationen wie Listen von Anwendungen, Listen von anderen Anwendungen die in Beziehung mit den Anwendungen stehen und die Arten von Ereignissen die jede Anwendung betreffen könnte. Konfigurations Manager (48) ist mit allen Anwendungen verbunden und überwacht sie auf Ereignisse, wie Fehlfunktionen oder Interventionen des System Managers, wie Wartung, Einbau, oder Entfernen von Datenbanken oder Gatern. z.B. wenn eine der Datenbanken und damit deren Lookup Application (82) zur Wartung vom System abgekoppelt werden, detektiert der Konflgurationsmanager (48) dieses Ereignis und erfährt durch Überprüfen des Verzeichnis (88) daß die Lookup Applications mit den Preprocessing Applications (84) in Verbindung stehen. Daraufhin benachrichtigt der Konfigurations Manager (48) die Preprocessing Applications (88) über den neuen Status der Lookup Applications. Die Preprocessing Applications (88) rekonfigurieren sich dann so daß nur mehr Datenbanken unter der verbliebenen Datenbanken ausgewählt werden. Im Falle von Round-Robin Selektionsverfahren für Datenbanken, bedeutet daß der zur Verfügung stehende Pool an Datenbanken für die Preprocessing Applications geändert wird. So trägt der Konfigurationsmanager zu Systemflexibilität, Skalierbarkeit und Anpassungsfähigkeit bei.

Nach erfolgter Beschreibung der vorliegenden Erfindung, ist es weiters offensichtlich daß Änderungen durchgeführt werden können, ohne den Rahmen der Erfindung, wie in den Ansprüchen ausgeführt wird, zu verlassen.

## Patentansprüche

1. Eine Methode, welche ein Computer Netzwerk und Datenbanken, zugänglich durch das Computer Netzwerk, nutzt, um eine effiziente Kontaktaufnahme zwischen Käufer und Anbieter chemischer Produkte zu ermöglichen, dadurch gekennzeichnet daß die Methode Schritte umfaßt so daß
a) eine Datenbank betrieben wird, in der sowohl Informationen über Anbieter chemischer Produkte als auch Informationen über die angebotenen chemischen Produkte des jeweiligen Anbieters gespeichert sind/werden;
b) Anbieter chemischer Produkte Informationen, die die Anbieter, die angebotenen chemischen Produkte, Kommunikations- oder Anforderungssprofile beschreiben, in die Datenbank eintragen oder bereits bestehende Einträge ändern, löschen oder korrigieren;
c) Anfragen nach chemischen Produkten erhalten werden, in denen ein Interessent seine Identität und das gewünschte chemische Produkt inklusive eventueller Spezifikationen bekanntgibt;
d) die Anbieter des gewünschten chemischen Produktes, unter Berücksichtigung eventueller Spezifikationen des Interessenten und allfälliger Anforderungsprofile der Anbieter an den Interessenten, identifiziert werden;
e) den so ermittelten Anbietern eine Nachricht per Email zugesendet wird, die, sowohl die notwendigen Informationen des Interessenten zur Kontaktaufnahme, als auch die Daten des gewünschten chemischen Produktes und die dazugehörigen Spezifikationen, enthält.
f) falls der ermittelte Anbieter in seinem Profil ein computergeneriertes Angebot für diese Substanz vorgesehen hat, dieses per Email dem Interessenten im Namen des Anbieters zugesendet wird;
g) auf Wunsch des Interessenten seine Anfrage der Öffentlichkeit über das Computernetzwerk zugänglich gemacht wird;

2. Eine Methode, welche ein Computer Netzwerk und Datenbanken, zugänglich durch das Computer Netzwerk, nutzt, um eine effiziente Kontaktaufnahme zwischen Käufer und Anbieter chemischer Produkte zu ermöglichen, dadurch gekennzeichnet daß die Methode Schritte umfaßt so daß
a) eine Datenbank betrieben wird, in der Informationen über eine sehr große Zahl bekannter chemischer Substanzen, identifiziert durch die CAS Registry Nummer, gespeichert sind;
b) eine Datenbank betrieben wird, in der sowohl Informationen über Anbieter chemischer Produkte als auch Informationen über die angebotenen chemischen Produkte des jeweiligen Anbieters gespeichert sind/werden;
c) Anbieter chemischer Produkte Informationen, die, die Anbieter, die angebotenen chemischen Produkte, Kommunikations- oder Anforderungssprofile beschreiben, in die Datenbank eintragen oder bereits bestehende Einträge ändern, löschen oder korrigieren;
d) Anfragen nach chemischen Produkten erhalten werden, in denen ein Interessent seine Identität und das gewünschte chemische Produkt inklusive eventueller Spezifikationen bekanntgibt;
e) die CAS Registry Nummer dieses Produktes ermittelt wird;
f) die Anbieter des gewünschten chemischen Produktes mit Hilfe der CAS Registry Nummer, unter Berücksichtigung eventueller Spezifikationen des Interessenten und allfälliger Anforderungsprofile der Anbieter an den Interessenten, identifiziert werden;
g) den so ermittelten Anbietern eine Nachricht per Email zugesendet wird, die, sowohl die notwendigen Informationen des Interessenten zur Kontaktaufnahme, als auch die Daten des gewünschten chemischen Produktes und die dazugehörigen Spezifikationen, enthält.

3. Eine Methode, welche ein Computer Netzwerk und Datenbanken, zugänglich durch das Computer Netzwerk, nutzt, um eine effiziente Kontaktaufnahme zwischen Käufer und Anbieter chemischer Produkte zu ermöglichen, dadurch gekennzeichnet daß die Methode Schritte umfaßt so daß
a) eine Datenbank betrieben wird, in der Informationen über eine sehr große Zahl bekannter chemischer Substanzen, identifiziert durch die CAS Registry Nummer, gespeichert sind;
b) eine Datenbank betrieben wird, in der sowohl Informationen über Anbieter chemischer Produkte als auch Informationen über die angebotenen chemischen Produkte des jeweiligen Anbieters gespeichert sind/werden;
c) Anbieter chemischer Produkte Informationen, die, die Anbieter, die angebotenen chemischen Produkte, Kommunikations- oder Anforderungssprofile beschreiben, in die Datenbank eintragen oder bereits bestehende Einträge ändern, löschen oder korrigieren;
d) Anfragen nach chemischen Produkten erhalten werden, in denen ein Interessent seine Identität und das gewünschte chemische Produkt inklusive eventueller Spezifikationen bekanntgibt;
e) die CAS Registry Nummer dieses Produktes ermittelt wird;
f) die Anbieter des gewünschten chemischen Produktes mit Hilfe der CAS Registry Nummer, unter Berücksichtigung eventueller Spezifikationen des Interessenten und alifälliger Anforderungsprofile der Anbieter an den Interessenten, identifiziert werden;
g) auf Wunsch des Interessenten seine Anfrage der Öffentlichkeit über das Computernetzwerk zugänglich gemacht wird;
h) falls der ermittelte Anbieter in seinem Profit ein computergeneriertes Angebot für diese Substanz vorgesehen hat, dieses per Email dem Interessenten im Namen des Anbieters zugesendet wird;
i) den ermittelten Anbietern eine Nachricht per Email zugesendet wird, die, sowohl die notwendigen Informationen des Interessenten zur Kontaktaufnahme, als auch die Daten des gewünschten chemischen Produktes und die dazugehörigen Spezifikationen, enthält.

4. Die Methode nach den Ansprüchen 2 oder 3, dadurch gekennzeichnet daß
die Informationen über eine sehr große Zahl bekannter chemischen Substanzen, Informationen sind wie beispielsweise und keineswegs einschränkend, CAS Registry Nummern, Substanznamen, Summenformeln, Trivialnamen, Handelsnamen, Substanzbezeichnungen, Beilstein Registry Nummern und EINECS Nummern;
die Informationen, über die Anbieter chemischer Produkte und die angebotenen chemischen Produkte, Informationen sind die
a) die Identität und Erreichbarkeit der Anbieter betreffen, wie beispielsweise und keineswegs einschränkend: Firmenname, Universitätsname, Institutionsnamen, Abteilung, Adressen, Kontaktpersonen, Telefon, Fax oder Telexnummern, Emailadressen, Postfächer, URL's oder Webseiten;
b) eventuelle Anforderungsprofile des Anbieters an die Interessenten beschreiben, wie beispielsweise und keineswegs einschränkend: Reinheit, gewünschte Absatzmärkte, Mindestverkaufsmenge, Maximalverkaufsmenge, Verkaufspreise, ausschließliche Akzeptanz von Firmenkunden, Verpackung oder minimale Lieferzeiten;
c) das Kommunikationsprofil zwischen der Methode und dem Anbieter beschreiben, wie beispielsweise und keineswegs einschränkend: Passwörter, die Nachrichten sollen per Email oder Fax zugeschickt werden;
d) die angebotenen chemischen Produkte wie beispielsweise und keineswegs einschränkend: chemische Substanzbezeichnungen, Trivialnamen, Handelsnamen, CAS-Registry Nummern, EINECS Nummern, Summenformeln, Beilsteinnummern, Katalognummern des Anbieters;
e) eventuell zu generierende Angebote betreffen, wie beispielsweise und keineswegs einschränkend: Texte die die Firma beschreiben, Verkaufspreise Mengenangaben, Verpackung, Lieferzeiten
und die Informationen die der Interessent bezüglich seiner Anfrage bekannt gibt, Informationen sind die
f) die Identität und Erreichbarkeit des Interessenten betreffen, wie beispielsweise und keineswegs einschränkend: Firmenname, Universitätsname, Institutionsnamen, Abteilung, Adressen, Kontaktpersonen, Telefon, Fax oder Telexnummern, Emailadressen, Postfächer, URL's oder Webseiten;
g) die gewünschten chemischen Produkte und eventuelle Spezifikationen des Interessenten beschreiben, wie beispielsweise und keineswegs einschränkend: chemische Substanzbezeichnungen, Trivialnamen, Handelsnamen, CAS-Registry Nummern, EINECS Nummern, Beilsteinnummern;
h) eventuelle Spezifikationen betreffen, wie beispielsweise und keineswegs einschränkend: Reinheit, Liefermenge, Lieferort, Lieferland, Zahlart, Preise, Verpackung oder maximale Lieferzeiten.

5. Die Methode nach den Ansprüchen 1-4 dadurch gekennzeichnet, daß
a) das genannte Computer Netzwerk vorzugsweise und keineswegs einschränkend das globale Internet ist;
b) die Datenbanken relationale Datenbanken, vorzugsweise und keineswegs einschränkend Structured Query Language (SQL) Datenbanken, sind;
c) daß eine Datenbank eine Liste aller Nutzer die registriert sind beinhaltet, wobei diese Liste auch Informationen zur Authentifizierung der Nutzer beinhaltet, die mit Informationen die die Nutzer angeben verglichen werden;
d) ein Anbieter die in Anspruch 4 genannten Informationen, die seine Identität und seine chemischen Produkte betreffen, in eine Datenbank eintragen oder abändern kann, indem er eine öffentlich zugängliche Website besucht und dort in interaktive Eingabeformulare diese Informationen einträgt;
e) Anfragen nach chemischen Produkten an die Datenbank über das Internet erhalten werden, indem ein Interessent ein interaktives Formular einer öffentlich zugänglichen Website ausfüllt.

6. Ein über das Internet erreichbares Online Service dadurch gekennzeichnet daß das Online Service folgende Mittel umfaßt:
einem Speicher welcher eine Reihe von Datenbanken, die Informationen über Nutzer und chemische Produkte enthalten, betreibt und unterstützt;
einem Prozeßsystem welches mit Anbietern chemischer Produkte über eine öffentlich zugängliche Webseite kommuniziert und diesen Anbietern ermöglicht sich registrieren zu lassen, so daß diese Anbieter Informationen über ihre chemischen Produkte, Kontaktinformationen oder Restriktionen bezüglich ihrer chemischen Produkte in die Datenbanken eintragen, abändern oder löschen können;
einem Prozeßsystem welches außerdem mit Käufern von chemischen Produkten, die eine Weiterleitung ihres Bedarfes an Anbieter dieser Produkte wünschen, über eine öffentlich zugängliche Webseite kommuniziert, eine Datenbank nach Anbietern dieser chemischen Produkte mit Hilfe der CAS Registry Nummer durchsucht und den Bedarf an die so ermittelten Anbieter dieser Produkte weiterleitet, oder falls der Anbieter ein automatisches Angebot generieren läßt, dieses generiert und an den Käufer sendet.

7. Das Online Service gemäß Anspruch 6 dadurch gekennzeichnet daß das Prozeßsystem Mittel umfaßt um einen Bedarf an chemischen Produkten von einem Käufer zu erhalten, um eine Datenbank, die Informationen über chemische Produkte und deren Anbieter enthält, nach Anbietern dieser Produkte zu durchsuchen, um den Bedarf an Anbieter dieser Produkte weiterzuleiten, um ein automatisches Angebot eines Anbieters an einen Interessenten zu generieren und zu versenden.

8. Das Online Service dadurch gekennzeichnet daß das Online Service folgende Mittel umfaßt:
einer Anzahl von Datenbanken zum Speichern von Informationen über Käufer und Anbieter von chemischen Produkten und Informationen über chemische Produkte, wobei jede dieser Datenbanken eine Lookup Application besitzt, die die Daten, als Reaktion auf eine Anfrage, aus dieser Datenbank aufruft;
einem Prozeßsystem welches mit Usern über eine öffentlich zugängliche Webseite kommuniziert, wobei dieses Prozeßsystem eine Reihe von Prozessoren beinhaltet, auf denen, keineswegs einschränkend, folgende Prozesse ablaufen:
eine Routine die Informationen von Anbietern chemischer Produkte erhält,
eine Routine die diese Einträge an die Datenbank weitergibt,
eine Routine die Anfragen von Käufern chemischer Produkte erhält,
eine Routine die die CAS Registry Nummern der gesuchten chemischen Produkte mit Hilfe der Lookup Application der Datenbank ermittelt,
eine Routine die die CAS Registry Nummern und die Spezifikationen der Anfragen an die Lookup Application der Datenbank weiterleitet
eine Routine die automatische Angebote generiert und diese versendet
eine Routine die Nachfragen weiterleitet
eine Routine die Buchungen aller Anfragen, Einträge und generierte Angebote vornimmt.

9. Das Online Service dadurch gekennzeichnet daß das Online Service folgende Mittel umfaßt:
Mittel um eine sehr große Anzahl an Informationen über chemische Substanzen zu speichern;
Mittel um Informationen über Anbieter chemischer Produkte zu speichern;
Mittel um Anfragen von Interessenten für chemische Produkte zu erhalten;
Mittel um die gespeicherten Informationen nach Anbietern dieser Produkte, unter Berücksichtigung von Spezifikationen der Interessenten und der Restriktionen der Anbieter, zu durchsuchen;
Mittel um automatische Angebote von Anbietern an die Interessenten zu generieren und zu versenden;
Mittel um Anfragen an die ermittelten Anbieter weiterzuleiten.

10. Das Online Service Service dadurch gekennzeichnet daß das Online Service folgende Mittel umfaßt:
Mittel um eine sehr große Anzahl an Informationen über chemische Substanzen zu speichern;
Mittel um Informationen über Anbieter chemischer Produkte zu speichern;
Mittel um Anfragen von Interessenten für chemische Produkte zu erhalten;
Mittel um die CAS Registry Nummern dieser Produkte zu ermitteln
Mittel um die gespeicherten Informationen nach Anbietern dieser Produkte mit Hilfe der CAS Registry Nummer, unter Berücksichtigung von Spezifikationen der Interessenten und der Restriktionen der Anbieter, zu durchsuchen;
Mittel um automatische Angebote von Anbietern an die Interessenten zu generieren und zu versenden;
Mittel um Anfragen an die ermittelten Anbieter weiterzuleiten.
